(19) **Europäisches Patentamt / European Patent Office / Office européen des brevets**

(11) **EP 1 978 465 A1**

(12) # EUROPEAN PATENT APPLICATION
published in accordance with Art. 153(4) EPC

(43) Date of publication:
**08.10.2008 Bulletin 2008/41**

(51) Int Cl.:
*G06F 21/22* (2006.01)  *G06F 21/20* (2006.01)

(21) Application number: **06702126.1**

(22) Date of filing: **05.01.2006**

(86) International application number:
**PCT/JP2006/300021**

(87) International publication number:
**WO 2007/077624 (12.07.2007 Gazette 2007/28)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Intelligent Wave Inc.**
**Tokyo 104-0033 (JP)**

(72) Inventors:
• **AOKI, Osamu**
**Tokyo 1660004 (JP)**

• **IKEDA, Haruko**
**Ichikawa-shi,**
**Chiba 2720115 (JP)**
• **KATO, Ryosuke**
**Tokyo 1350044 (JP)**

(74) Representative: **Grünecker, Kinkeldey, Stockmair & Schwanhäusser**
**Anwaltssozietät**
**Leopoldstrasse 4**
**80802 München (DE)**

(54) **UNAUTHORIZED ACCESS MONITOR PROGRAM, UNAUTHORIZED MONITOR METHOD, AND UNAUTHORIZED MONITOR SYSTEM**

(57) It is possible to provide an unauthorized operation monitoring program for calculating a modified score by reflecting a suspicious value indicated from a series of operations by a user who operates a computer in order to monitor an unauthorized operation to the computer. When a modified score that indicates probability of an unauthorized operation is calculated for an object event, a suspicious value (PSV) corresponding to the level of the calculated modified score is set. When a new event occurs next time, for the score (direct score) calculated for the new event, a modified score reflecting the PSV set for the previous event and a time difference between the previous event and the new event is calculated. When operations that the probability of the unauthorized operation is high are continuously performed, or when operations of which the suspicious value is high are repeated, a higher level of a modified score is calculated.

【 FIG. 3 】

Printed by Jouve, 75001 PARIS (FR)

**Description**

TECHNICAL FIELD

The present invention relates to an unauthorized operation monitoring program, an unauthorized operation monitoring method, and an unauthorized operation monitoring system for calculating a modified score by reflecting a suspicious value indicated from a series of operations by a user who operates a computer in order to monitor an unauthorized operation to the computer.

BACKGROUND ART

When computers are used in a company or the like, it has been an important problem to prevent data leakage and information leakage from the inside thereof resulting from unauthorized operations of the computers together with preventing unauthorized data entry from the outside through the networks, such as the Internet. In order to prevent such information leakage from the inside thereof, the present applicant provides an internal information leakage preventing system for automatically detecting the unauthorized operations to the computers and thereby taking measures (http: //www.iwi.co.jp/japanese/CWAT/index.html).

In the above-described internal information leakage preventing system, probability of being unauthorization for respective operations is determined while monitoring unusual actions different from usual actions to the computer by a user, and when it is determined that probability of being an unauthorized action is high, predetermined actions for preventing the information leakage such as stopping output to a printer or writing on an external disk are executed (for example, refer to Patent Document 1). In the determination of the probability of being unauthorization, various determination methods such as detecting unusual actions different from the usual operations with reference to a profile for every user, referring to a profile not only for every user but also node, or the like (for example, refer to Patent Document 2) can be employed other than comparing with a general rule of the unauthorized action.

Patent Document 1: Japanese Unexamined Patent Publication (Kokai) No. 2005-149243
Patent Document 2: International Publication Pamphlet WO05/048119

DISCLOSURE OF THE INVENTION

PROBLEM TO BE SOLVED BY THE INVENTION

As described above, in the case of determining a probability of being an unauthorized operation while monitoring operations to a computer, if an operation individually performed corresponds to a case where it is generally an unauthorized action in many cases by comparing with a general rule or a action pattern for every user (for example, a case of writing large volumes of data), or a case where it is recognized as an unusual action for the user who has performed the operation (for example, a case of performing an output operation of data on holidays when the user usually do not operate the computer), it is determined that the probability of being the unauthorized operation is high. Namely, the determination of the unauthorized operation is to be individually performed for each operation.

However, even in the same operation in which the probability of being the unauthorized operation is high, it is common that the probabilities of being the unauthorized operation are different depending on a procedure of a series of operations performed previously. For example, even in the same operation of writing large volumes of data, if there are a case where the computer is started during usual working hours and the data is written after document creation or the like is performed, and a case where the computer is started at midnight out of working hours and writing is successively performed from the copy of the large volumes of data, it is considered that the latter action obviously has a higher degree of suspicion when capturing them as a series of operations.

Hence, in order to determine the probability of being the unauthorized operation more accurately and elaborately while monitoring the operations to the computer, it is more preferable to perform the determination by using a suspicious value indicating a degree of suspicion reflecting a flow of a series of continuous operations by the user than to perform the determination by individually capturing a degree of suspicion of the operation performed to the computer.

The present invention is made to cope with such problems, and relates to an unauthorized operation monitoring program, an unauthorized operation monitoring method, and an unauthorized operation monitoring system for calculating a modified score by reflecting a suspicious value indicated from a series of operations by the user who operates the computer in order to monitor unauthorized operations to the computer.

MEANS FOR SOLVING THE PROBLEM

In the present invention, when a modified score indicating a probability that a user operation is an unauthorized operation is calculated, a suspicious value corresponding to a level of the calculated modified score is set. When a new operation is performed next time, a modified score is calculated with respect to a new score calculated for the operation by reflecting the suspicious value set by the last operation, so that a higher level of the modified score may be calculated, when operations that the probability of the unauthorized operation is high are successively performed, or when operations of which the suspicious value is higher are repeated.

An unauthorized operation monitoring program in accordance with the present invention is an unauthorized operation monitoring program for calculating a modified score indicating probability of an unauthorized operation in an n-th event generated by a user operation by reflecting a suspicious value indicated from a past operation progress of the user, in order to monitor the unauthorized operations by the user to a computer, wherein a suspicious value set by reflecting a modified score in an (n-1)th event generated by the user operation is temporarily stored in a memory of the computer. The unauthorized operation monitoring program causes the computer to execute: an event reception step of receiving the n-th event generated by the user operation; a direct score calculating step of referring to at least one of an unauthorized rule storage unit for storing a rule for determining whether or not the event corresponds to the unauthorized operation, and the unit being provided in the computer or another computer connected with the computer through networks, or a profile storage unit for storing a profile on the events generated by the past operations of the user, and the unit being provided in the computer or another computer connected with the computer through networks, and thereby calculating a direct score reflecting probability that the operation that has generated the n-th event is the unauthorized operation; a time difference calculating step of calculating a time difference between a time of receiving the (n-1)th event and a time of receiving the n-th event; a modified score calculating step of calculating a modified score indicating the probability of the unauthorized operation in the n-th event by reflecting the time difference, and the suspicious value read from a memory area of the computer to the direct score; if the modified score exceeds a predetermined reference value, an unauthorized operation stopping step of executing a command for stopping actions to be executed by the operation that has generated the n-th event; and a suspicious value updating step of updating a suspicious value set by reflecting the modified score in the (n-1)th event and temporarily stored in the memory of the computer to a suspicious value set by reflecting the modified score in the n-th event, by reflecting the modified score in the n-th event calculated by the modified score calculating step to the suspicious value, and temporarily storing the updated suspicious value in the memory of the computer.

Moreover, the unauthorized operation monitoring program may be **characterized in that** a multiplication value storage unit for defining and storing a multiplication value corresponding to a level of the modified score is provided in the computer or another computer connected with the computer through the networks, wherein, in the suspicious value updating step, a multiplication value corresponding to the modified score in the n-th event calculated by the modified score calculating step is acquired from the multiplication value storage unit, and the suspicious value set by reflecting the modified score in the (n-1)th event and temporarily stored in the memory of the computer is multiplied by the multiplication value and thereby updated to the suspicious value set by reflecting the modified score in the n-th event.

Further, the unauthorized operation monitoring program may be characterized by causing the computer to execute an initial value storing step in which the suspicious value is set to an initial value and temporarily stored in the memory of the computer when the computer receives login from the user, wherein, if the event received in the event reception step is a first event generated by the user operation, the direct score calculated by the direct score calculating step is specified as the modified score in the modified score calculating step, and the initial value temporarily stored in the memory of the computer is updated to the suspicious value set by reflecting the modified score in the first event specified by the modified score calculating step to the initial value in the suspicious value updating step, and temporarily stored in the memory of the computer.

An unauthorized operation monitoring method in accordance with the present invention is an unauthorized operation monitoring method for calculating a modified score indicating probability of an unauthorized operation in an n-th event generated by a user operation by reflecting a suspicious value indicated from a past operation progress of the user, in order to monitor the unauthorized operations by the user to a computer, wherein a suspicious value set by reflecting a modified score in an (n-1)th event generated by the user operation is temporarily stored in a memory of the computer. The unauthorized operation monitoring method comprises: an event reception step in which the computer receives the n-th event generated by the user operation; a direct score calculating step in which the computer refers to at least one of an unauthorized rule storage unit for storing a rule for determining whether or not the event corresponds to the unauthorized operation, and the unit being provided in the computer or another computer connected with the computer through networks, or a profile storage unit for storing a profile on the events generated by the past operations of the user, and the unit being provided in the computer or another computer connected with the computer through networks, and thereby calculates a direct score reflecting probability that the operation that has generated the n-th event is the unauthorized operation; a time difference calculating step in which the computer calculates a time difference between a time of receiving the (n-1)th event and a time of receiving the n-th event; a modified score calculating step in which the computer calculates a modified score indicating the probability of the unauthorized operation in the n-th event by reflecting the time difference, and the suspicious value read from a memory area of the computer to the direct score; if the modified score exceeds a predetermined reference value, an unauthorized operation stopping step in which the computer executes a command for stopping actions to be executed by the operation that has generated the n-th event; and a suspicious value updating step in which the computer updates a suspicious value set by reflecting the modified score in the (n-1)th event and temporarily stored in the memory of the computer to a suspicious value set by reflecting the modified score in the n-th event, by reflecting the modified score in the n-th event calculated by the modified score calculating step to the suspicious value, and temporarily stores the updated suspicious value in the memory of the computer.

Moreover, the unauthorized operation monitoring method may be **characterized in that** a multiplication value storage unit for defining and storing a multiplication value corresponding to a level of the modified score is provided in the computer or another computer connected with the computer through the networks, wherein, in the suspicious value updating step, a multiplication value corresponding to the modified score in the n-th event calculated by the modified score calculating step is acquired from the multiplication value storage unit, and the suspicious value set by reflecting the modified score in the (n-1)th event and temporarily stored in the memory of the computer is multiplied by the multiplication value and thereby updated to the suspicious value set by reflecting the modified score in the n-th event.

Further, the unauthorized operation monitoring method may be characterized by comprising an initial value storing step in which, by the computer, the suspicious value is set to an initial value and temporarily stored in the memory of the computer when the computer receives login from the user, wherein, if the event received in the event reception step is a first event generated by the user operation, the direct score calculated by the direct score calculating step is specified as the modified score in the modified score calculating step, and the initial value temporarily stored in the memory of the computer is updated to the suspicious value set by reflecting the modified score in the first event specified by the modified score calculating step to the initial value in the suspicious value updating step, and temporarily stored in the memory of the computer.

An unauthorized operation monitoring system in accordance with the present invention is an unauthorized operation monitoring system for calculating a modified score indicating probability of an unauthorized operation in an n-th event generated by a user operation by reflecting a suspicious value indicated from a past operation progress of the user, in order to monitor the unauthorized operations by the user to a computer. The unauthorized operation monitoring system comprises: a suspicious value storage means for temporarily storing the suspicious value set by reflecting the modified score in the event generated by the user operation; an event receiving means for receiving the n-th event generated by the user operation; an unauthorized rule storage means for storing a rule for determining whether or not the event received by the event receiving means corresponds to the unauthorized operation; a profile storage means for storing a profile on the events generated by the past operations of the user; a direct score calculating means for referring to at least one of the unauthorized rule storage means or the profile storage means, and thereby calculating a direct score reflecting the probability that the operation that has generated the n-th event is the unauthorized operation; a time difference calculating means for calculating a time difference between a time of receiving the (n-1)th event and a time of receiving the n-th event; a modified score calculating means for calculating a modified score indicating the probability of the unauthorized operation in the n-th event by reflecting the time difference, and a suspicious value set by reflecting the modified score in the (n-1)th event and read from the suspicious value storage means to the direct score; if the modified score exceeds a predetermined reference value, an unauthorized operation stopping means for executing a command for stopping actions to be executed by the operation that has generated the n-th event; and a suspicious value updating means for updating the suspicious value set by reflecting the modified score in the (n-1)th event and stored in the suspicious value storage means to the suspicious value set by reflecting the modified score in the n-th event, by reflecting the modified score calculated by the modified score calculating means to the suspicious value.

Moreover, the unauthorized operation monitoring system may be characterized by comprising a multiplication value storage means for defining and storing the multiplication value corresponding to the level of the modified score calculated by the modified score calculating means, wherein, by the suspicious value updating means, the multiplication value corresponding to the modified score in the n-th event calculated by the modified score calculating means is acquired from the multiplication value storage means, and the suspicious value set by reflecting the modified score in the (n-1) th event and temporarily stored in the suspicious value storage means is multipled by the multiplication value and thereby updated to the suspicious value set by reflecting the modified score in the n-th event.

Further, the unauthorized operation monitoring system may be characterized by comprising a suspicious value initialization means for setting the suspicious value to be stored in the suspicious value storage means to an initial value when the computer receives login from the user, wherein, if the event received by the event receiving means is the first event generated by the user operation, the direct score calculated by the direct score calculating means is specified as the modified score by the modified score calculating means, and when the suspicious value set by reflecting the modified score in the first event is updated by the suspicious value updating means, the initial value stored in the suspicious value storage means is updated to the suspicious value reflecting the modified score specified by the modified score calculating means to the initial value.

EFFECT OF THE INVENTION

According to the present invention, when the unauthorized computer operations are monitored, the modified score is calculated by reflecting not only the suspicious degree of the individual operation to the computer but also the suspicious degree indicated from a series of operations by the user, thereby allowing the score value reflecting the suspicious degree to be calculated more accurately and elaborately. The probability of the unauthorized operation is determined based on the score value, which is calculated more accurately and elaborately, to thereby cope with it, thus allowing security against an internal information leakage or the like to be enhanced.

BEST MODE(S) FOR CARRYING OUT THE INVENTION

Hereinafter, best modes for carrying out the present invention will be described in detail using the drawings. It is to be understood that specific examples such as formulas of calculating modified scores, setting of multiplication values, or the like illustrated in the embodiments described hereinafter are one example of the present invention, and the present invention is not limited to such embodiments.

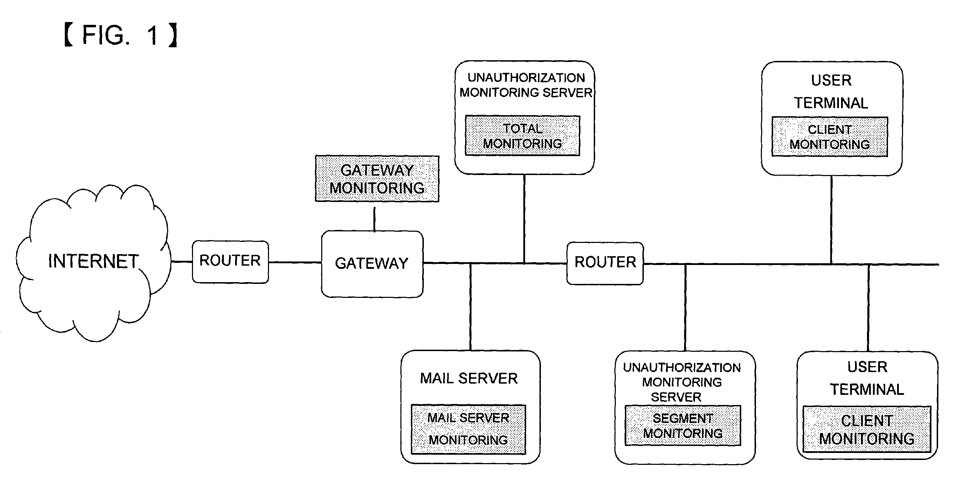

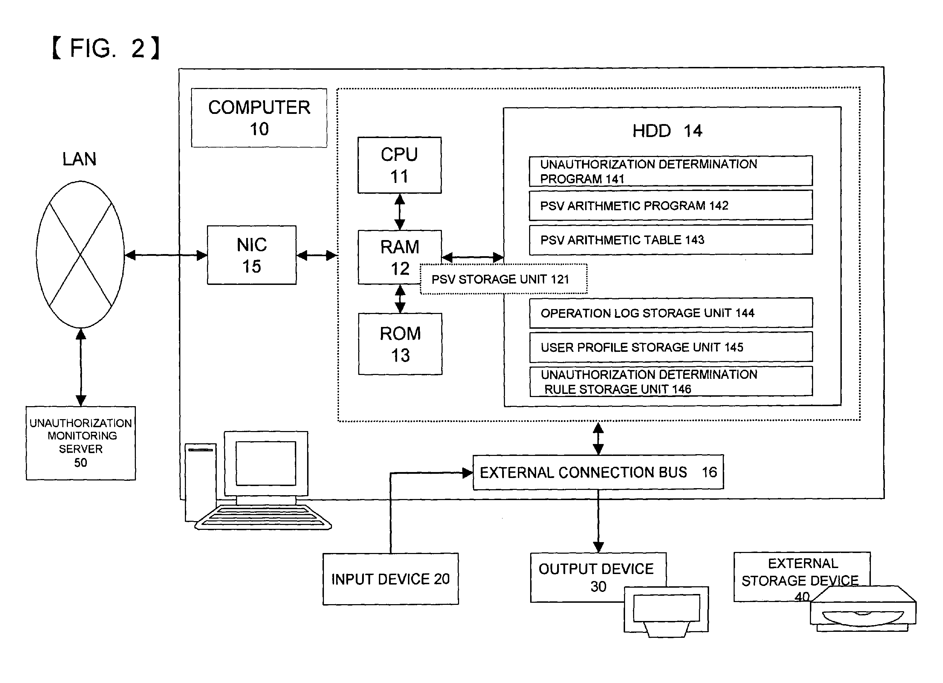

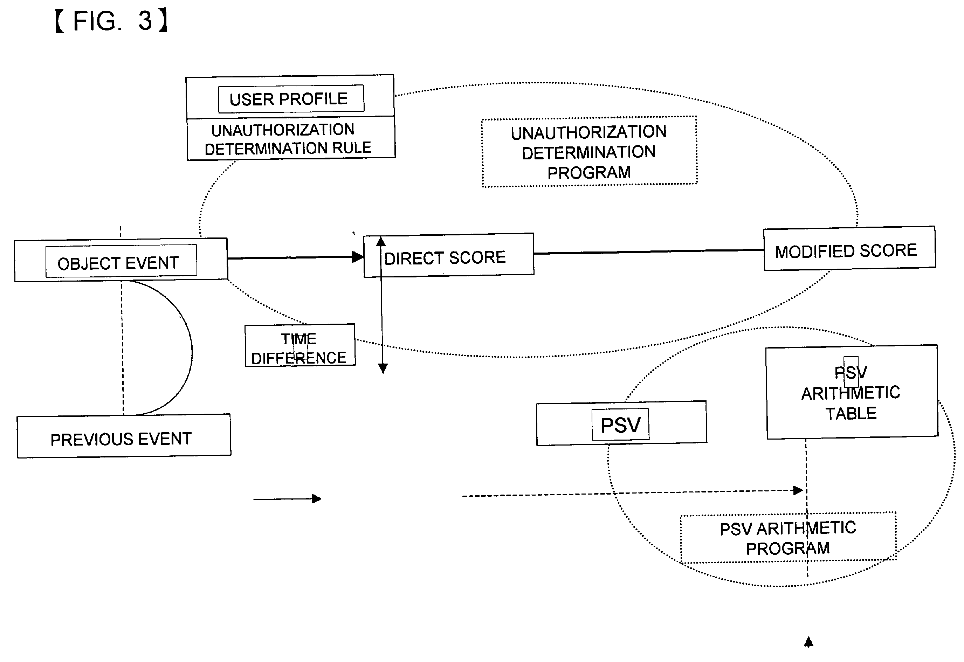

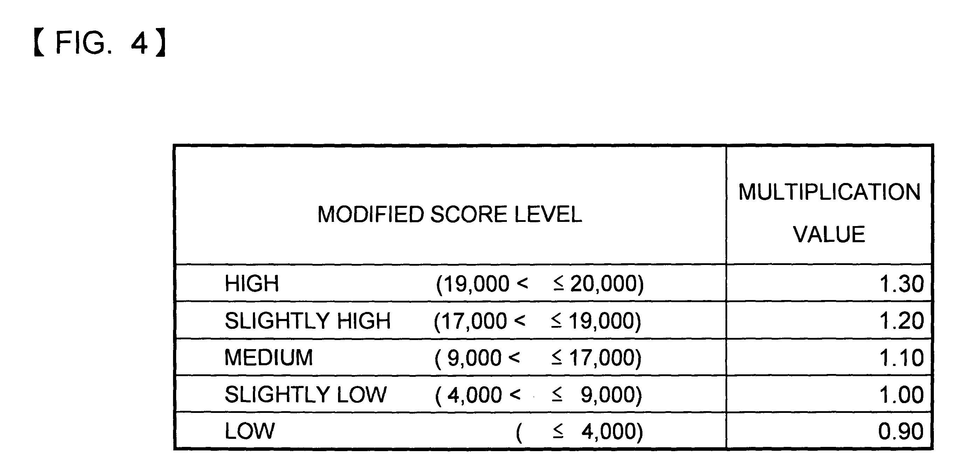

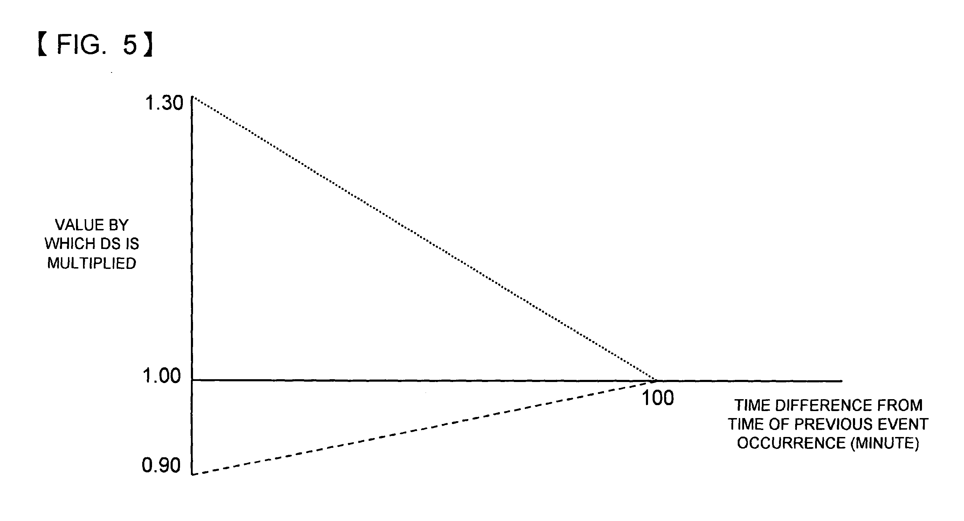

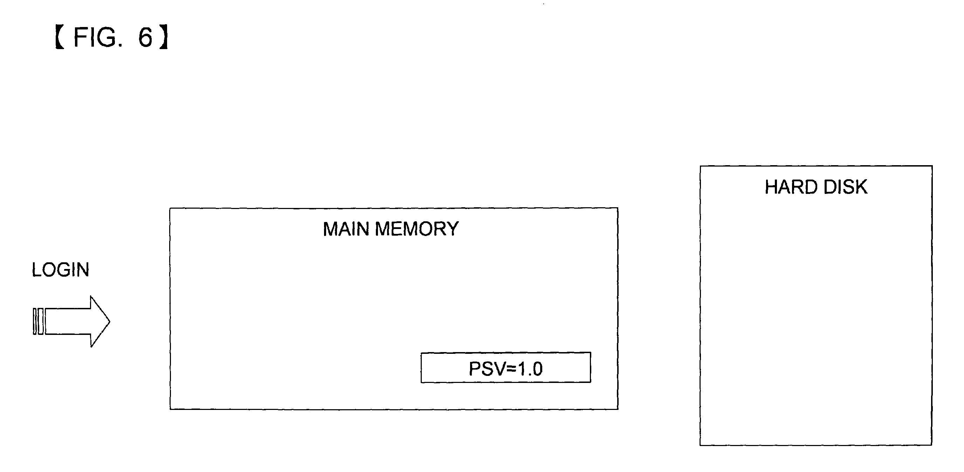

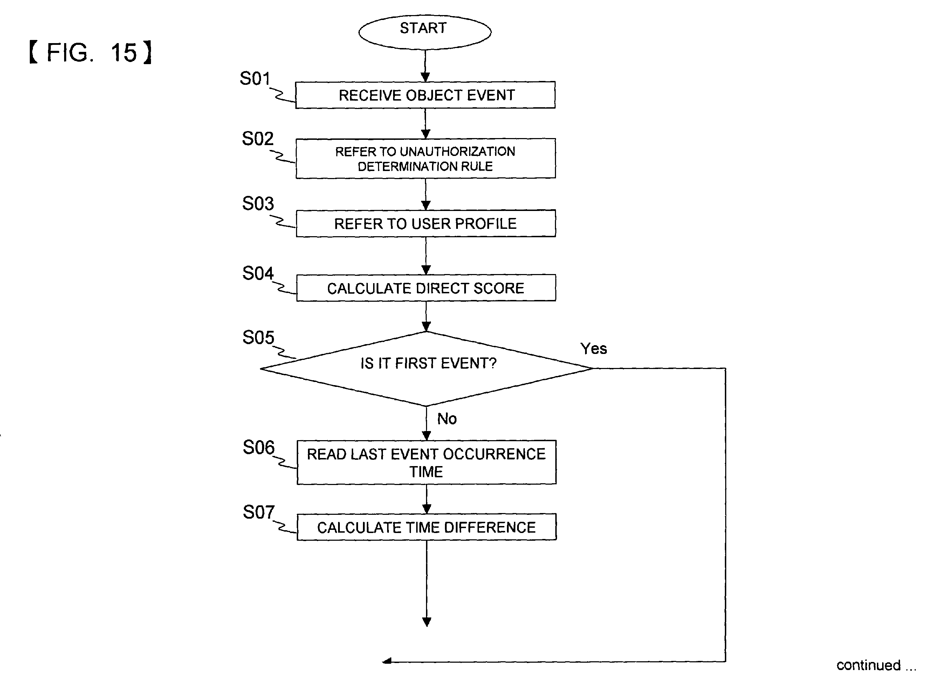

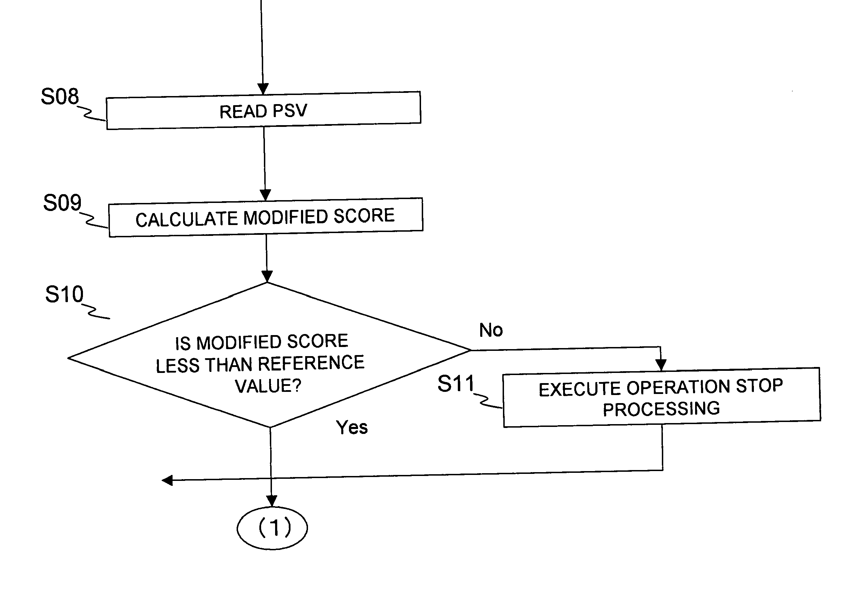

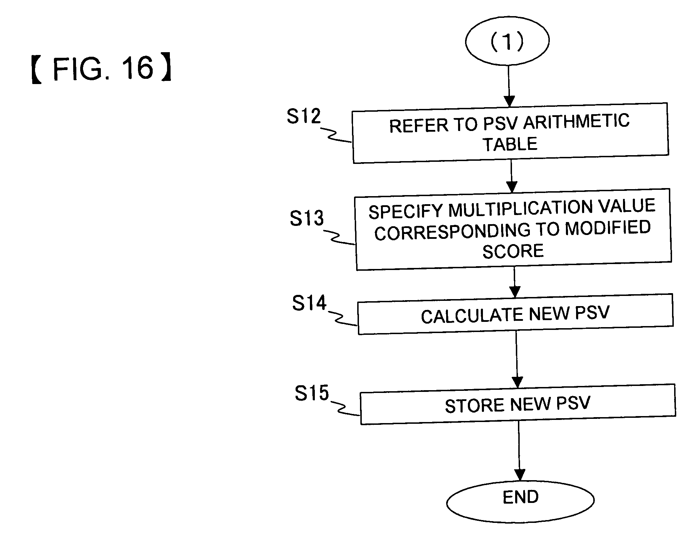

Fig. 1 is a view showing a mode of use of an unauthorized operation monitoring system in accordance with the present invention. Fig. 2 is a block diagram showing a configuration of the unauthorized operation monitoring system in accordance with the present invention. Fig. 3 is a view showing a calculation method of a modified score by the unauthorized operation monitoring system in accordance with the present invention. Fig. 4 is a view showing one example of a PSV arithmetic table in the unauthorized operation monitoring system in accordance with the present invention. Fig. 5 is a view showing an example of a change in a value by which a direct score is multiplied according to a time difference in the unauthorized operation monitoring system in accordance with the present invention. Fig. 6 through Fig. 14 are first through ninth views, respectively, showing actions for monitoring the modified score in the unauthorized operation monitoring system in accordance with the present invention. Fig. 15 and Fig. 16 are first and second flow charts, respectively, showing a flow for monitoring the modified score in the unauthorized operation monitoring system in accordance with the present invention.

The mode of use of the unauthorized operation monitoring system in accordance with the present invention will be described using Fig. 1. Since the unauthorized operation monitoring system in accordance with the present invention is introduced mainly as measures against internal information leakage in a company or the like, it is usually used in a computer connected to an intra-company LAN or the like, but it may be used in a stand-alone computer. While Fig. 1 shows an example used for operation monitoring at a user terminal which is connected to networks, such as the intra-company LAN or the like, and which is used by general staffs or the like in the company, the user terminal is provided with a program for monitoring, which performs processing of stopping actions executed by an operation determined to have a high unauthorized probability at respective terminals.

In addition, the unauthorized operation monitoring system in accordance with the present invention can also be applied to a case of monitoring data flowing through the networks in a segment unit or by the whole network in a monitoring server, monitoring mails transmitted and received from a mail server, monitoring data via a gateway, or the like, other than the operations to the user terminal. In these monitoring, although an object to be monitored is not limited to the operations executed to the computer, but data acquired from the network and data written in the server will also be monitored, it is not a different from a case of calculating the modified score for the operations in that a rule or the like is applied to these data to calculate a modified score, so that it is possible to similarly apply a computing type of the modified score according to the present invention thereto.

Incidentally, although the general rule for calculating the modified score and the profile for every user for determining an unusual action are usually stored in each of computers provided with a monitoring program, it may also be configured such that while storing the program in the unauthorization monitoring server or the like within the networks, the rule and the profile are referred to by accessing to the unauthorization monitoring server during the calculation of the modified score.

In Fig. 2, the unauthorized operation monitoring system in accordance with the present invention is provided with a computer 10 connected to LAN. In order to execute predetermined processing based on application programs stored in a HDD 14 in the computer 10, various fundamental programs for hardware control, such as input control, output control, or the like stored in a ROM 13 are started, and a CPU 11 performs arithmetic processing while operating a RAM 12 as a work area of the application programs.

An unauthorization determination program 141 for determining whether or not the operation received by the computer 10 is unauthorized, and a PSV arithmetic program 142 for calculating a suspicious value indicating a degree of suspicion of a series of operations (It is referred to as "PSV" from the abbreviation for Previous Status Value in the following description.), wherein the suspicious value is used for a part of unauthorized determination are stored in the HDD 14. A PSV arithmetic table 143, which is referred to in calculating the PSV used for the next determination from the modified score calculated by the unauthorization determination program 141 is also stored therein.

The RAM 12 is provided with a PSV storage unit 121, which is an area for storing the PSV, and the PSV calculated by the PSV arithmetic program 142 is temporarily stored in the PSV storage unit 121. The temporarily stored PSV is read therefrom during next modified score calculation, and when the next modified score is calculated, it is updated to a new PSV reflecting the modified score to be then temporarily stored in the PSV storage unit 121. Incidentally, the PSV storage unit 121 may be provided in a virtual memory area of the HDD 14.

Further, the HDD 14 is provided with an operation log storage unit 144 for storing information on contents, reception time, or the like, of the operation received by the computer 10. In order to calculate the modified score by the unauthorization determination program 141, a user profile storage unit 145 for defining an action pattern for every user, which is used as a basis of score calculation, an unauthorization determination rule storage unit 146 for regularizing common patterns on the unauthorized operation, and the like are provided, but a part or all of these may be provided in the unauthorization monitoring server 50 to thereby be referred to via LAN for every calculation of the modified score. In addition, when the HDD 14 of the computer 10 is provided with the unauthorization determination rule storage unit 146, a newly set rule may be transmitted from the unauthorization monitoring server 50 to update the rules stored in the unauthorization determination rule storage unit 146 as required.

When it is determined the probability that a received operation is unauthorized is high by the unauthorization determination program 141, the unauthorization determination program 141 executes actions for stopping the operation. For example, when an operation for transmitting data outside through LAN is determined to be unauthorized, it sends a NIC 15 a command for stopping the data transmission, while when an operation for performing data output or writing to an output device 30 or an external storage device 40 is determined to be unauthorized, it sends a command for stopping an output instruction or a write instruction transmitted to an external connection bus 16.

Here, a method for calculating the modified score reflecting a degree of suspicion of a series of operations using the PSV will be described using Fig. 3. When the computer receives an event generated by the operation performed by the user, the event being a calculation object for the modified score, a user profile in which rules for unauthorized determination and usual action patterns of the user are recorded is referred to, and a direct score (Hereinafter, referred to as Direct Score= "DS".) that indicates the probability of being unauthorized is calculated in a manner similar to that of the conventional unauthorized determination system. In the conventional unauthorized determination system, the direct score calculated here is employed as the modified score as it is.

Compared with this, in order to reflect a degree of suspicion of an operation progress up to a previous event to the score with respect to the direct score, a modified score (Hereinafter, referred to as Modified Score= "MS".) which is adjusted using a predetermined numerical value is calculated in the present invention. Specifically, the PSV which reflects a numerical value relevant to a time difference from a previous event to an object event (Hereinafter, referred to "Term%".) and the degree of suspicion up to the previous event is used for adjustment of the modified score.

As for the time difference from the previous event to the object event, it is generally considered that the shorter the time difference is, the higher the degree of suspicion is. Accordingly, for example, it is to be calculated by Term%=1.00-{(object event occurrence time-previous event occurrence time) /100} (unit of generating time is a minute).

As for the PSV, it is preferable to set such that the higher modified score may be calculated as operations with high unauthorized probability are performed successively even in the same operation. The reason is that for example, even in the same operation of writing a large amount of files with high unauthorized probability, when a case where it is executed after general operations, such as document file creation, during a usual working hours, and a case where it is executed after a computer is started at night out of working hours and files which are hardly accessed usually are accessed are compared with each other, it is considered that the later clearly indicates a high probability of being unauthorized.

Accordingly, in setting of the PSV, the PSV set by previous event is multiplied by a corresponding multiplication value depending on the level of the modified score calculated due to the object event using, for example, a PSV arithmetic table shown as an example in Fig. 4, so that it becomes possible to set a PSV value high, as the operation with high unauthorized probability is successively performed. Note that, the PSV is set to the initial value (=1.00) when a user to be a target logs in the computer, and shall be updated as required until the user logs off.

Namely, it is set as PSV=1.00 upon login, and when the multiplication value is specified as 1.30 from the modified score of the first event, it is updated as PSV=1.00×1.30=1.30. Further, when the multiplication value is specified as 1.30 also from the modified score of next event, PSV=1.30×1.30=1.69 is obtained, and when the high modified score is successively calculated, the PSV value will also increase sequentially.

As described until now, when the PSV and the Term% shall be calculated, the modified score (MS) can be defined by calculating, for example,

$$MS = DS \times \{(PSV - 1.00) \times Term\% + 1.00\}.$$

According to such a formula, as the operations further continue for a short time (as the value of =Term% is larger), and as the operations with high unauthorized probability further continues (as the =PSV is higher), it is possible to calculate the modified score (MS) reflecting the actual condition more accurately and elaborately from the direct score (DS) calculated only from the object event.

As described above, although the modified score (MS) is calculated by multiply the direct score (DS) by (PSV-1.00)×Term%+1.00, when the time difference between the object event occurrence time and the previous event occurrence time is 100 minutes, it results in

$$Term\% = 0$$

, and thus the value by which the direct score (DS) is multiplied will be 0. It is Fig. 5 that shows this relation, wherein a dotted line indicates behavior of the changes of the multiplying value according to the time difference in the case of PSV=1,30, while a dashed line indicates behavior of the change of the multiplying value according to the time difference in the case of PSV=0.90. Namely, even when suspicious actions continue to thereby increase the PSV, it is determined that relevance with the previous event is low as the time difference between this event and the previous events is increased, and thus the multiplying value will be converged to 1.00. Similarly in a case where normal actions continue to thereby decreases the PSV, it is determined that relevance with the previous event is low as the time difference between this event and the previous events is increased, and thus the multiplying value will be converged to 1.00.

Subsequently, the actions for monitoring the modified score in the unauthorized operation monitoring system in accordance with the present invention will be described using Fig. 6 through Fig. 14. Note herein that a main memory shown in Fig. 6 through Fig. 14 shall also include a virtual memory on a hard disk other than a main memory provided in the computer.

First, when the user logs in to the computer as shown in Fig. 6, the initial value 1.00 of the PSV is temporarily stored in a predetermined storage area (the PSV storage unit 121 in the case of Fig. 2) of the main memory.

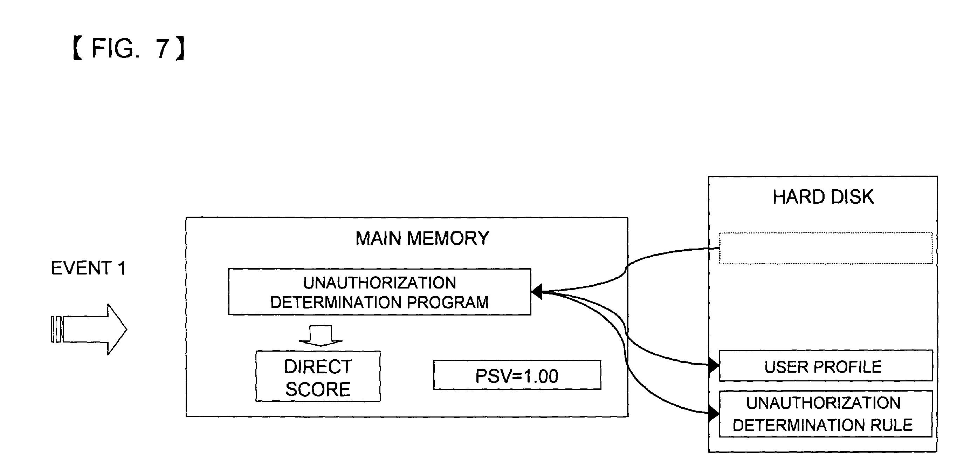

As shown in Fig. 7, when the user who has logged in performs the first operation, the unauthorization determination program (the unauthorization determination program 141 in the case of Fig. 2) is read from the hard disk to the main memory in order to receive an event 1 generated by the operation to determine whether or not the event 1 is due to the unauthorized operation. Although a direct score that indicates a probability that the event 1 is unauthorized is calculated by the read unauthorization determination program, a scoring model for calculating the direct score is not limited in particular.

For example, the event 1 may be compared with the user profile which defines the usual action pattern of the user to thereby determine the probability of being unauthorized for the user depending on whether or not it corresponds to the unusual action, or alternatively, the event 1 may be compared with the unauthorization determination rule which defines the common unauthorized pattern to thereby determine the probability of being unauthorized depending on whether or not it corresponds to a pattern which is unauthorized in many cases based on rules of thumb.

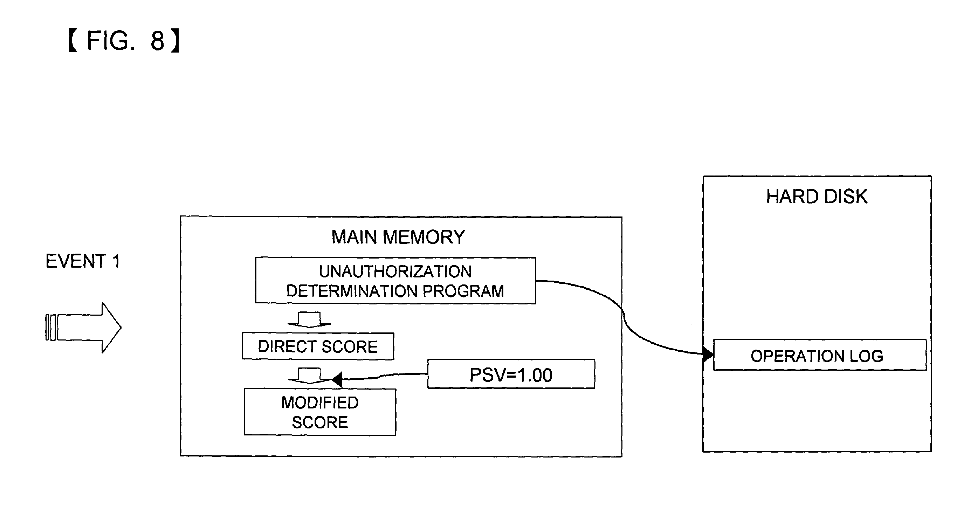

Further, information on the received event 1 is recorded on a predetermined storage area (the operation log storage unit 144 in the case of Fig. 2) of the hard disk as a log, as shown in Fig. 8. The information to be recorded may include a time (it may be a received time) when the event 1 occurred.

When a modified score of the first event is calculated, the previous event does not exist after the login, and thus a time difference between the first event and the previous event can not be calculated. Meanwhile, the PSV is set to 1.00, which is the initial value. Hence, as for a first modified score, the direct score previously calculated is employed as it is, as shown in Fig. 8.

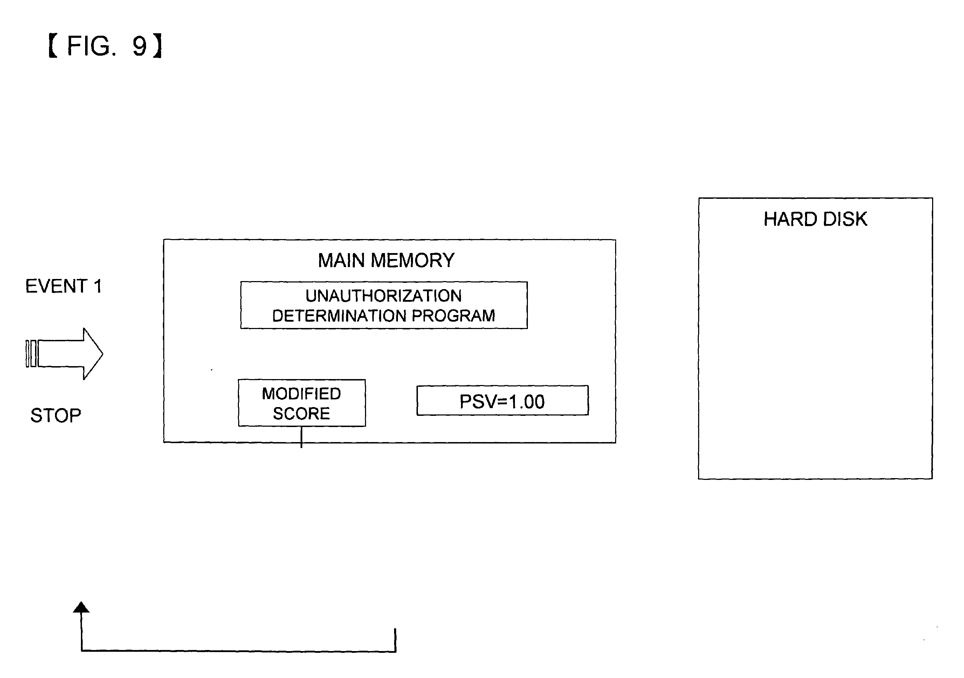

When the modified score on the event 1 is calculated in this way, it is determined whether or not the operation for generating the event 1 is unauthorized depending on whether or not the modified score exceeds a predetermined threshold value. When the score exceeds the threshold value, a command for stopping the operation which generated the event 1, for example, processing of stopping output to the printer or writing to the external disk, processing of disconnecting connections with networks, processing of stopping E-mail transmissions, or the like is executed as shown in Fig. 9. When it does not exceed the threshold value, the processing by the event 1 will be executed as it is.

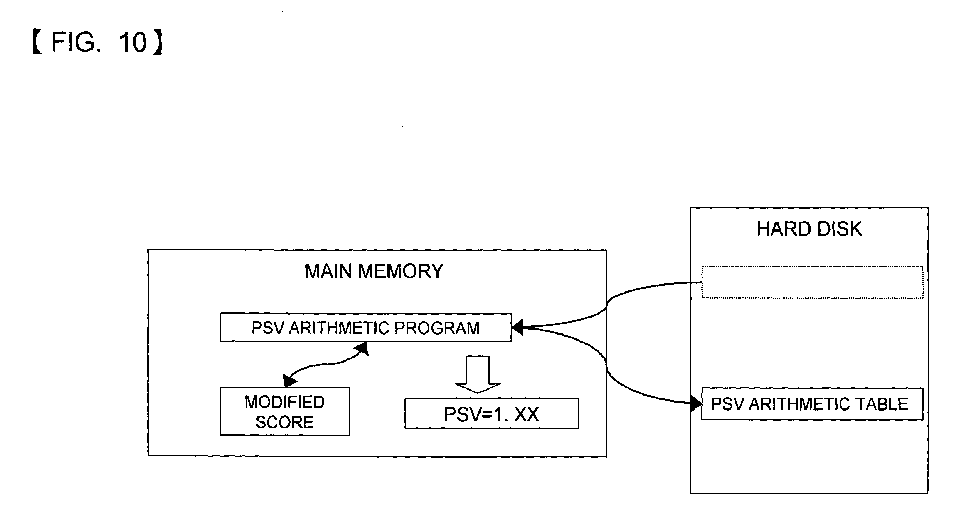

When the unauthorized determination on the event 1 is completed, the PSV arithmetic program (the PSV arithmetic program 142 in the case of Fig. 2) is read from the hard disk to the main memory in order to update the PSV reflecting the calculated modified score as shown in Fig. 10. A new PSV reflecting the calculated modified score on the event 1 is calculated by the read PSV arithmetic program, and the PSV value temporarily stored in the main memory is updated.

The new PSV is calculated by referring to the PSV arithmetic table (the PSV arithmetic table 143 in the case of Fig. 2) stored in the hard disk, acquiring a multiplication value corresponding to the calculated modified score on the event 1, and multiplying 1.00 stored as the initial value of the PSV by the acquired multiplication value. The initial value of the PSV temporarily stored in the predetermined storage area of the main memory is updated to the calculated new PSV ("1.XX" in Fig. 10).

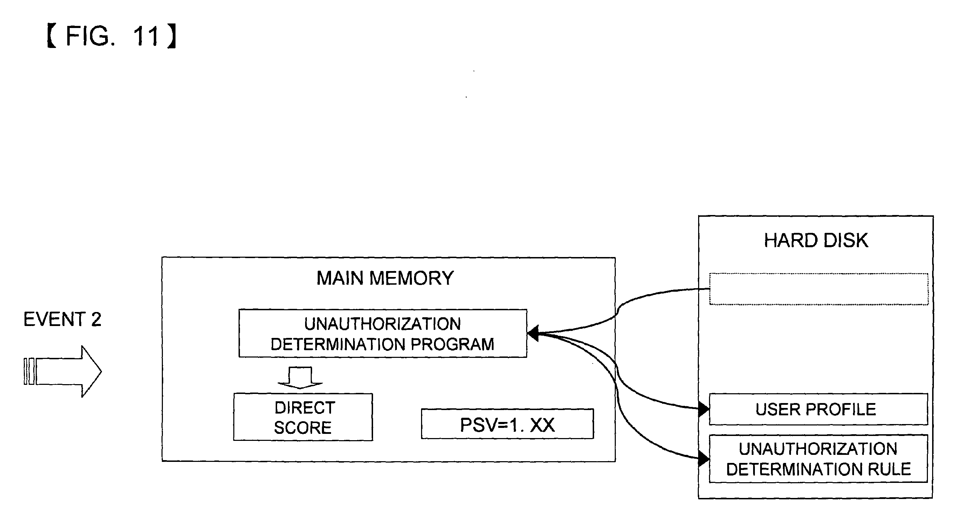

Next, when the same user performs a second operation, the unauthorization determination program is read from the hard disk to the main memory in order to receive an event 2 generated by this operation to determine whether or not the event 2 is due to the unauthorized operation as shown in Fig. 11. A direct score that indicates a probability that the event 2 is unauthorized is calculated by the read unauthorization determination program.

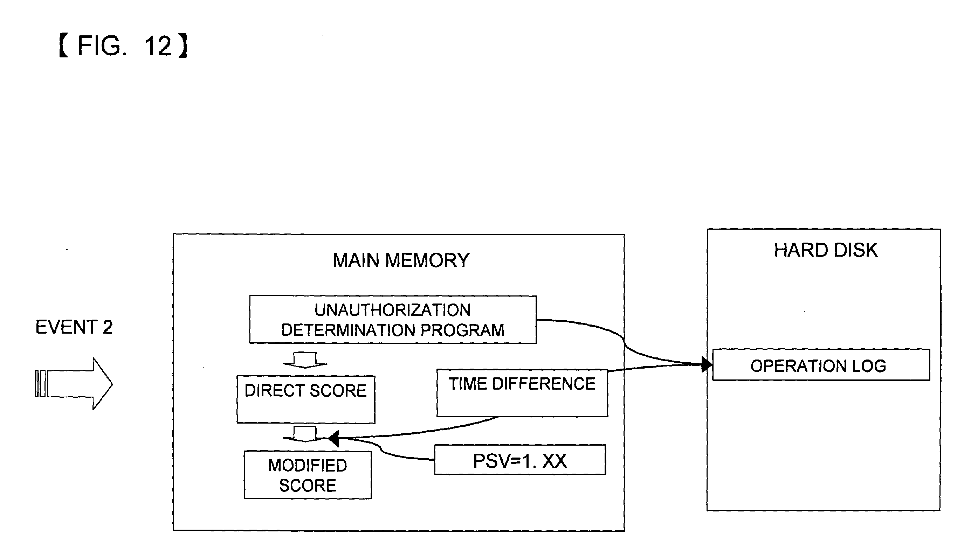

Additionally, information on the received event 2 is recorded on the predetermined storage area of the hard disk as a log, as shown in Fig. 12. The information to be recorded may include a time (it may be a received time) when the event 2 occurred. Further, the time when the event 1 which is the previous event occurred is acquired from the recorded log to thereby calculate a time difference between it and the time when the event 2 occurred.

When the modified score on the event 2 is calculated, the calculated time difference, and the PSV temporarily stored in the main memory are used. Although it is not particularly limited how the time difference and the PSV are used for a formula for the calculation of the modified score, it is preferable to use them to further reduce influences by the PSV as the time difference becomes longer so that the value of the high modified score may be higher as the PSV has a is higher value. The modified score on the event 2 is calculated by applying such a formula to the direct score as shown in Fig. 12.

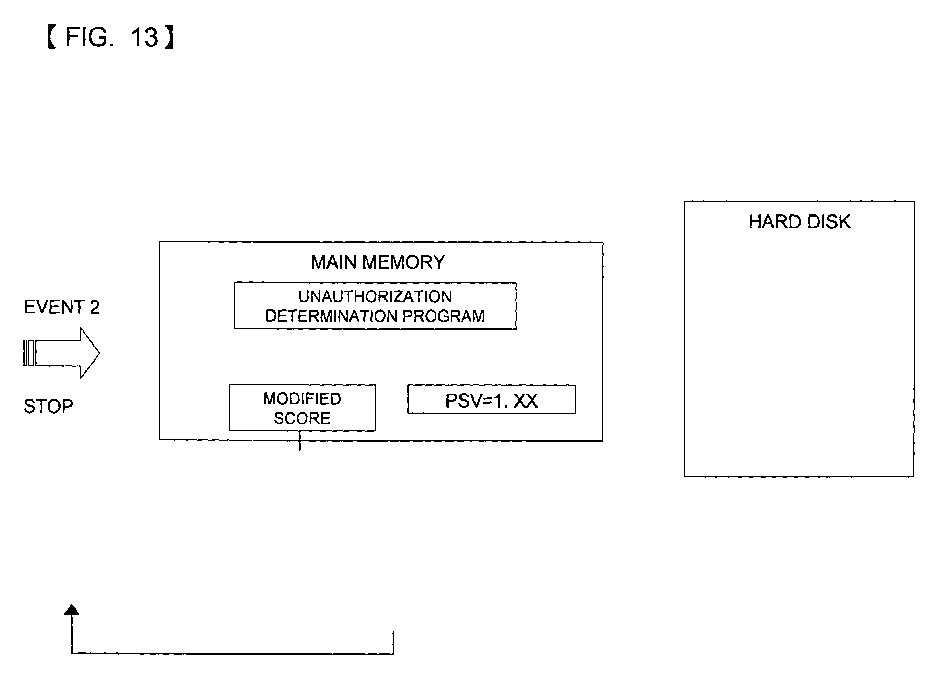

When the modified score on the event 2 is calculated in this way, it is determined whether or not the operation which generated the event 2 is unauthorized depending on whether or not the modified score exceeds the predetermined threshold value. When the score exceeds the threshold value, a command for stopping the operation which generated the event 2 is executed as shown in Fig. 13. When it does not exceed the threshold value, the processing by the event 2 will be executed as it is.

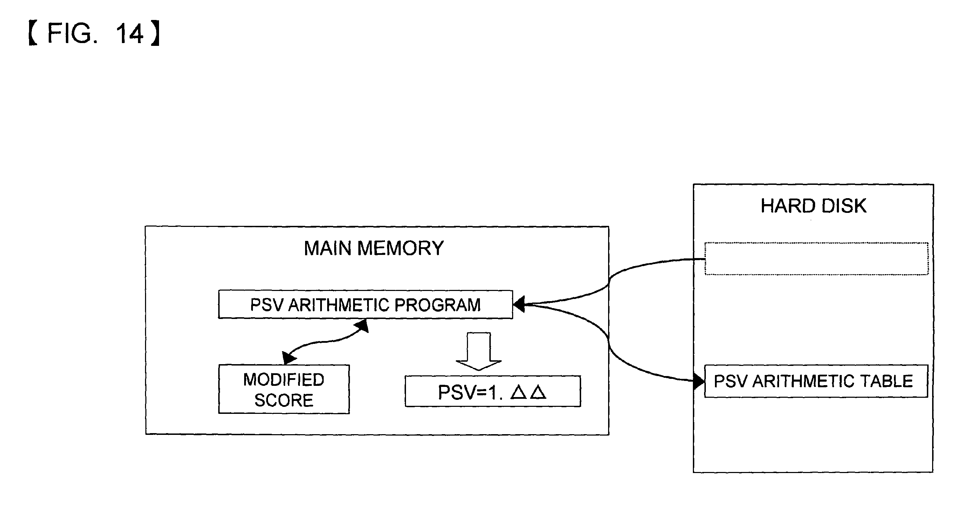

When the unauthorized determination on the event 2 is completed, the PSV arithmetic program is read from the hard disk to the main memory in order to update the PSV reflecting the calculated modified score as shown in Fig. 14. A new PSV reflecting the calculated modified score on the event 2 is calculated by the read PSV arithmetic program, and the PSV value stored in the main memory is updated.

The new PSV is calculated by referring to the PSV arithmetic table stored in the hard disk, acquiring a multiplication value corresponding to the calculated modified score on the event 2, and multiplying temporarily stored PSV=1.XX as the value reflecting the modified score of the event 1 which is the previous event by the acquired multiplication value. PSV=1.XX temporarily stored in the predetermined storage area of the main memory is updated to the calculated new PSV ("1. ΔΔ" in Fig. 14).

Further, when the same user subsequently performs a third or more operations successively, processing similar to that described in Fig. 11 through Fig. 14 will be repeated for every operation of each time. Update of the PSV is continued from login to logoff by the same user, and the updated PSV is held in the main memory.

Incidentally, the example to determines whether or not the operation that the user executes to the computer is unauthorized has been described in Fig. 6 through Fig. 14, but regarding the calculation method of the modified score using the PSV and the time difference described here, the monitoring of the unauthorized operations is not limited the case of directly monitoring the operations executed to the computer, but it is also possible to apply to the calculation of the modified score in a case of, for example, monitoring transmission and reception of the unauthorized data or the like by the data flowing through the networks, such as LAN or the like, or monitoring transmission and reception of the unauthorized data or the like by the data passing through the gateway. In this case, the data that the monitoring server acquired from the networks, or the data passing through the gateway becomes an object for calculating the direct score, instead of the event to be received.

A flow for monitoring the modified score in the unauthorized operation monitoring system in accordance with the present invention will be described using Fig. 15 and Fig. 16. First, when the computer receives an event to be an object (S01), it refers to the unauthorization determination rule or the user profile (S02, S03), and calculates a direct score reflecting only contents of the object event (S04).

When the object event is not the first event (S05), the occurrence time of the event received last time is read from the log (S06), and a time difference between that and the occurrence time of the object event received this time is calculated (S07). When the object event is the first event, processing at Step 06 and Step 07 will not be executed.

Next, the temporarily stored PSV is read (S08), and the time difference and the PSV are applied to the direct score to thereby calculate a modified score reflecting the suspicious degree indicated from a series of operations by the user (S09). it is confirmed whether or not the calculated modified score exceeds a reference value for determining it to be unauthorized (S10), and when it exceeds the reference value, processing for stopping processing by the operation which generated the object event is executed (S11). When it does not exceed the reference value, the processing by the operations is executed as it is since the processing is not stopped. The unauthorized determination on the object event is completed according to the above flow shown in Fig. 15.

The unauthorized determination on the object event is completed in this way, processing of updating the PSV shown in the flow of Fig. 16 is performed. When the processing of the unauthorized determination is completed, the PSV arithmetic table is referred to (S12) to specify a multiplication value corresponding to the calculated modified score on the object event (S13). A new PSV is calculated by multiplying the temporarily stored PSV by the specified multiplication value (S14) to thereby update the temporarily stored PSV to the calculated PSV, and the processing of the PSV update will be completed.

Note that the processing sequence of the processing of executing the operation stop depending on whether or not the modified score exceeds the reference value (S10 and S11) and the processing of the PSV update (S12 through S15) shown in Fig. 15 and Fig. 16 is not limited in particular, but in contrast to the aforementioned description, comparison between the modified score and the reference value may be performed after the PSV update.

BRIEF DESCRIPTION OF THE DRAWINGS

Fig. 1 is a view showing a mode of use of an unauthorized operation monitoring system in accordance with the present invention;

Fig. 2 is a block diagram showing a configuration of the unauthorized operation monitoring system in accordance with the present invention;

Fig. 3 is a view showing a calculation method of a modified score by the unauthorized operation monitoring system in accordance with the present invention;

Fig. 4 is a view showing one example of a PSV arithmetic table in the unauthorized operation monitoring system in accordance with the present invention;

Fig. 5 is a view showing an example of a change in a value by which a direct score is multiplied according to a time difference in the unauthorized operation monitoring system in accordance with the present invention;

Fig. 6 is a first view showing actions for monitoring a modified score in the unauthorized operation monitoring system in accordance with the present invention;

Fig. 7 is a second view showing actions for monitoring the modified score in the unauthorized operation monitoring system in accordance with the present invention;

Fig. 8 is a third view showing actions for monitoring the modified score in the unauthorized operation monitoring system in accordance with the present invention;

Fig. 9 is a fourth view showing actions for monitoring the modified score in the unauthorized operation monitoring system in accordance with the present invention;

Fig. 10 is a fifth view showing actions for monitoring the modified score in the unauthorized operation monitoring system in accordance with the present invention;

Fig. 11 is a sixth view showing actions for monitoring the modified score in the unauthorized operation monitoring system in accordance with the present invention;

Fig. 12 is a seventh view showing actions for monitoring the modified score in the unauthorized operation monitoring system in accordance with the present invention;

Fig. 13 is an eighth view showing actions for monitoring the modified score in the unauthorized operation monitoring system in accordance with the present invention;

Fig. 14 is a ninth view showing actions for monitoring the modified score in the unauthorized operation monitoring system in accordance with the present invention;

Fig. 15 is a first flow chart showing a flow for monitoring the modified score in the unauthorized operation monitoring system in accordance with the present invention; and

Fig. 16 is a second flow chart showing a flow for monitoring the modified score in the unauthorized operation monitoring system in accordance with the present invention.

EXPLANATIONS OF LETTERS OR NUMERALS

10:     Computer
11:     CPU
12:     RAM
121:    PSV storage unit

13:     ROM
14:     HDD
141:    Unauthorization determination program
142:    PSV arithmetic program
143:    PSV arithmetic table
144:    Operation log storage unit
145:    User profile storage unit
146:    Unauthorization determination rule storage unit
15:     NIC
16:     External connection bus
20:     Input device
30:     Output device
40:     External storage device
50:     Unauthorization monitoring server

**Claims**

1. An unauthorized operation monitoring program for calculating a modified score indicating probability of an unauthorized operation in an n-th event generated by a user operation by reflecting a suspicious value indicated from a past operation progress of the user, in order to monitor the unauthorized operations by the user to a computer, wherein a suspicious value set by reflecting a modified score in an (n-1)th event generated by the user operation is temporarily stored in a memory of the computer, the unauthorized operation monitoring program causing the computer to execute:

   an event reception step of receiving the n-th event generated by the user operation;
   a direct score calculating step of referring to at least one of an unauthorized rule storage unit for storing a rule for determining whether or not the event corresponds to the unauthorized operation, and the unit being provided in the computer or another computer connected with the computer through networks, or a profile storage unit for storing a profile on the events generated by the past operations of the user, and the unit being provided in the computer or another computer connected with the computer through networks, and thereby calculating a direct score reflecting probability that the operation that has generated the n-th event is the unauthorized operation;
   a time difference calculating step of calculating a time difference between a time of receiving the (n-1)th event and a time of receiving the n-th event;
   a modified score calculating step of calculating a modified score indicating the probability of the unauthorized operation in the n-th event by reflecting the time difference, and the suspicious value read from a memory area of the computer to the direct score;
   if the modified score exceeds a predetermined reference value, an unauthorized operation stopping step of executing a command for stopping actions to be executed by the operation that has generated the n-th event; and
   a suspicious value updating step of updating a suspicious value set by reflecting the modified score in the (n-1)th event and temporarily stored in the memory of the computer to a suspicious value set by reflecting the modified score in the n-th event, by reflecting the modified score in the n-th event calculated by the modified score calculating step to the suspicious value, and temporarily storing the updated suspicious value in the memory of the computer.

2. The unauthorized operation monitoring program according to claim 1, wherein a multiplication value storage unit for defining and storing a multiplication value corresponding to a level of the modified score is provided in the computer or another computer connected with the computer through the networks,
   Wherein, in the suspicious value updating step, a multiplication value corresponding to the modified score in the n-th event calculated by the modified score calculating step is acquired from the multiplication value storage unit, and the suspicious value set by reflecting the modified score in the (n-1)th event and temporarily stored in the memory of the computer is multiplied by the multiplication value and thereby updated to the suspicious value set by reflecting the modified score in the n-th event.

3. The unauthorized operation monitoring program according to claim 1 or 2, causing the computer to execute an initial value storing step in which the suspicious value is set to an initial value and temporarily stored in the memory of the computer when the computer receives login from the user,

Wherein, if the event received in the event reception step is a first event generated by the user operation, in the modified score calculating step, the direct score calculated by the direct score calculating step is specified as the modified score, and

in the suspicious value updating step, the initial value temporarily stored in the memory of the computer is updated to the suspicious value set by reflecting the modified score in the first event specified by the modified score calculating step to the initial value, and temporarily stored in the memory of the computer.

4. An unauthorized operation monitoring method for calculating a modified score indicating probability of an unauthorized operation in an n-th event generated by a user operation by reflecting a suspicious value indicated from a past operation progress of the user, in order to monitor the unauthorized operations by the user to a computer, wherein a suspicious value set by reflecting a modified score in an (n-1)th event generated by the user operation is temporarily stored in a memory of the computer, the unauthorized operation monitoring method comprising:

an event reception step in which the computer receives the n-th event generated by the user operation;

a direct score calculating step in which the computer refers to at least one of an unauthorized rule storage unit for storing a rule for determining whether or not the event corresponds to the unauthorized operation, and the unit being provided in the computer or another computer connected with the computer through networks, or a profile storage unit for storing a profile on the events generated by the past operations of the user, and the unit being provided in the computer or another computer connected with the computer through networks, and thereby calculates a direct score reflecting probability that the operation that has generated the n-th event is the unauthorized operation;

a time difference calculating step in which the computer calculates a time difference between a time of receiving the (n-1)th event and a time of receiving the n-th event;

a modified score calculating step in which the computer calculates a modified score indicating the probability of the unauthorized operation in the n-th event by reflecting the time difference, and the suspicious value read from a memory area of the computer to the direct score;

if the modified score exceeds a predetermined reference value, an unauthorized operation stopping step in which the computer executes a command for stopping actions to be executed by the operation that has generated the n-th event; and

a suspicious value updating step in which the computer updates a suspicious value set by reflecting the modified score in the (n-1)th event and temporarily stored in the memory of the computer to a suspicious value set by reflecting the modified score in the n-th event, by reflecting the modified score in the n-th event calculated by the modified score calculating step to the suspicious value, and temporarily stores the updated suspicious value in the memory of the computer.

5. The unauthorized operation monitoring method according to claim 4, wherein a multiplication value storage unit for defining and storing a multiplication value corresponding to a level of the modified score is provided in the computer or another computer connected with the computer through the networks,

Wherein, in the suspicious value updating step, a multiplication value corresponding to the modified score in the n-th event calculated by the modified score calculating step is acquired from the multiplication value storage unit, and the suspicious value set by reflecting the modified score in the (n-1)th event and temporarily stored in the memory of the computer is multiplied by the multiplication value and thereby updated to the suspicious value set by reflecting the modified score in the n-th event.

6. The unauthorized operation monitoring method according to claim 4 or 5, comprising an initial value storing step in which, by the computer, the suspicious value is set to an initial value and temporarily stored in the memory of the computer when the computer receives login from the user,

Wherein, if the event received in the event reception step is a first event generated by the user operation,

in the modified score calculating step, the direct score calculated by the direct score calculating step is specified as the modified score, and

in the suspicious value updating step, the initial value temporarily stored in the memory of the computer is updated to the suspicious value set by reflecting the modified score in the first event specified by the modified score calculating step to the initial value , and temporarily stored in the memory of the computer.

7. An unauthorized operation monitoring system for calculating a modified score indicating probability of an unauthorized operation in an n-th event generated by a user operation by reflecting a suspicious value indicated from a past operation progress of the user, in order to monitor the unauthorized operations by the user to a computer, the unauthorized operation monitoring system comprising:

a suspicious value storage means for temporarily storing the suspicious value set by reflecting the modified score in the event generated by the user operation;

an event receiving means for receiving the n-th event generated by the user operation;

an unauthorized rule storage means for storing a rule for determining whether or not the event received by the event receiving means corresponds to the unauthorized operation;

a profile storage means for storing a profile on the events generated by the past operations of the user;

a direct score calculating means for referring to at least one of the unauthorized rule storage means or the profile storage means, and thereby calculating a direct score reflecting the probability that the operation that has generated the n-th event is the unauthorized operation;

a time difference calculating means for calculating a time difference between a time of receiving the (n-1)th event and a time of receiving the n-th event;

a modified score calculating means for calculating a modified score indicating the probability of the unauthorized operation in the n-th event by reflecting the time difference, and a suspicious value set by reflecting the modified score in the (n-1)th event and read from the suspicious value storage.means to the direct score;

if the modified score exceeds a predetermined reference value, an unauthorized operation stopping means for executing a command for stopping actions to be executed by the operation that has generated the n-th event; and

a suspicious value updating means for updating the suspicious value set by reflecting the modified score in the (n-1)th event and stored in the suspicious value storage means to the suspicious value set by reflecting the modified score in the n-th event, by reflecting the modified score calculated by the modified score calculating means to the suspicious value.

8. The unauthorized operation monitoring system according to claim 7, comprising a multiplication value storage means for defining and storing the multiplication value corresponding to the level of the modified score calculated by the modified score calculating means,

Wherein, by the suspicious value updating means, the multiplication value corresponding to the modified score in the n-th event calculated by the modified score calculating means is cquired from the multiplication value storage means, and the suspicious value set by reflecting the modified score in the (n-1)th event and temporarily stored in the suspicious value storage means is multiplede by the multiplication value and thereby updated to the suspicious value set by reflecting the modified score in the n-th event.

9. The unauthorized operation monitoring system according to claim 7 or 8, comprising a suspicious value initialization means for setting the suspicious value to be stored in the suspicious value storage means to an initial value when the computer rexeives login from the user,

Wherein, if the event received by the event receiving means is the first event generated by the user operation, the direct score calculated by the direct score calculating means is specified as the modified score by the modified score calculating means, and

when the suspicious value set by reflecting the modified score in the first event is updated by the suspicious value updating means, the initial value stored in the suspicious value storage means is updated to the suspicious value reflecting the modified score specified by the modified score calculating means to the initial value.

【 FIG. 1 】

EP 1 978 465 A1

【FIG. 2】

LAN

COMPUTER
10

CPU
11

RAM
12

PSV STORAGE UNIT 121

ROM
13

NIC
15

HDD 14

UNAUTHORIZATION DETERMINATION
PROGRAM 141

PSV ARITHMETIC PROGRAM 142

PSV ARITHMETIC TABLE 143

OPERATION LOG STORAGE UNIT 144

USER PROFILE STORAGE UNIT 145

UNAUTHORIZATION DETERMINATION
RULE STORAGE UNIT 146

UNAUTHORIZATION
MONITORING
SERVER
50

EXTERNAL CONNECTION BUS    16

INPUT DEVICE 20

OUTPUT DEVICE
30

EXTERNAL
STORAGE DEVICE
40

EP 1 978 465 A1

【FIG. 3】

USER PROFILE

UNAUTHORIZATION
DETERMINATION RULE

UNAUTHORIZATION
DETERMINATION
PROGRAM

OBJECT EVENT

DIRECT SCORE

MODIFIED SCORE

PREVIOUS EVENT

TIME
DIFFERENCE

PSV

PSV
ARITHMETIC
TABLE

PSV ARITHMETIC
PROGRAM

EP 1 978 465 A1

【FIG. 4】

| MODIFIED SCORE LEVEL | | MULTIPLICATION VALUE |
|---|---|---|
| HIGH | (19,000 < ≤ 20,000) | 1.30 |
| SLIGHTLY HIGH | (17,000 < ≤ 19,000) | 1.20 |
| MEDIUM | ( 9,000 < ≤ 17,000) | 1.10 |
| SLIGHTLY LOW | ( 4,000 < ≤ 9,000) | 1.00 |
| LOW | ( ≤ 4,000) | 0.90 |

EP 1 978 465 A1

【FIG. 5】

VALUE BY
WHICH DS IS
MULTIPLIED

1.30

1.00

0.90

100

TIME DIFFERENCE FROM
TIME OF PREVIOUS EVENT
OCCURRENCE (MINUTE)

EP 1 978 465 A1

【FIG. 6】

HARD DISK

MAIN MEMORY

PSV=1.0

LOGIN

【FIG. 7】

HARD DISK

USER PROFILE

UNAUTHORIZATION DETERMINATION RULE

MAIN MEMORY

UNAUTHORIZATION DETERMINATION PROGRAM

DIRECT SCORE

PSV=1.00

EVENT 1

【FIG. 8】

EVENT 1

⟹

MAIN MEMORY

UNAUTHORIZATION
DETERMINATION PROGRAM

⇩

DIRECT SCORE

⇩

MODIFIED
SCORE

PSV=1.00

HARD DISK

OPERATION LOG

EP 1 978 465 A1

【FIG. 9】

EVENT 1

STOP

MAIN MEMORY

UNAUTHORIZATION
DETERMINATION PROGRAM

MODIFIED
SCORE

PSV=1.00

HARD DISK

EP 1 978 465 A1

【 FIG. 10 】

MAIN MEMORY

HARD DISK

PSV ARITHMETIC PROGRAM

MODIFIED SCORE

PSV=1. XX

PSV ARITHMETIC TABLE

【FIG. 11】

**HARD DISK**

USER PROFILE

UNAUTHORIZATION DETERMINATION RULE

**MAIN MEMORY**

UNAUTHORIZATION DETERMINATION PROGRAM

DIRECT SCORE

PSV=1. XX

EVENT 2

【 FIG. 12 】

EVENT 2 →

MAIN MEMORY

UNAUTHORIZATION
DETERMINATION PROGRAM

DIRECT SCORE

TIME DIFFERENCE

MODIFIED
SCORE

PSV=1. XX

HARD DISK

OPERATION LOG

EP 1 978 465 A1

【 FIG. 13 】

EVENT 2

STOP

MAIN MEMORY

UNAUTHORIZATION
DETERMINATION PROGRAM

MODIFIED
SCORE

PSV=1. XX

HARD DISK

EP 1 978 465 A1

【 FIG. 14 】

HARD DISK

PSV ARITHMETIC TABLE

MAIN MEMORY

PSV ARITHMETIC PROGRAM

PSV=1. △△

MODIFIED SCORE

# 【FIG. 15】

EP 1 978 465 A1

```
                          ┌──────────┐
                          │  START   │
                          └──────────┘
                               │
                               ▼
S01    ┌───────────────────────────────────┐
       │       RECEIVE OBJECT EVENT         │
       └───────────────────────────────────┘
                               │
                               ▼
S02    ┌───────────────────────────────────┐
       │       REFER TO UNAUTHORIZATION     │
       │        DETERMINATION RULE          │
       └───────────────────────────────────┘
                               │
                               ▼
S03    ┌───────────────────────────────────┐
       │        REFER TO USER PROFILE       │
       └───────────────────────────────────┘
                               │
                               ▼
S04    ┌───────────────────────────────────┐
       │        CALCULATE DIRECT SCORE      │
       └───────────────────────────────────┘
                               │
                               ▼
S05         ◇─────────────────────────◇         Yes
            ◇    IS IT FIRST EVENT?    ◇─────────────┐
            ◇─────────────────────────◇             │
                               │                     │
                               │ No                  │
                               ▼                     │
S06    ┌───────────────────────────────────┐        │
       │   READ LAST EVENT OCCURRENCE       │        │
       │             TIME                   │        │
       └───────────────────────────────────┘        │
                               │                     │
                               ▼                     │
S07    ┌───────────────────────────────────┐        │
       │      CALCULATE TIME DIFFERENCE     │        │
       └───────────────────────────────────┘        │
                               │                     │
                               ▼                     │
                               │◄────────────────────┘
```

continued ...

S08 READ PSV

S09 CALCULATE MODIFIED SCORE

S10 IS MODIFIED SCORE LESS THAN REFERENCE VALUE?

No

Yes

S11 EXECUTE OPERATION STOP PROCESSING

(1)

【 FIG. 16 】

( 1 )

S12 — REFER TO PSV ARITHMETIC TABLE

S13 — SPECIFY MULTIPLICATION VALUE CORRESPONDING TO MODIFIED SCORE

S14 — CALCULATE NEW PSV

S15 — STORE NEW PSV

END

EP 1 978 465 A1

**EP 1 978 465 A1**

<table>
<tr><td colspan="2" align="center">**INTERNATIONAL SEARCH REPORT**</td><td>International application No.<br>PCT/JP2006/300021</td></tr>
</table>

A. CLASSIFICATION OF SUBJECT MATTER
*G06F21/22*(2006.01), *G06F21/20*(2006.01)

According to International Patent Classification (IPC) or to both national classification and IPC

B. FIELDS SEARCHED

Minimum documentation searched (classification system followed by classification symbols)
*G06F21/22*(2006.01), *G06F21/20*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | "Naibu Joho Roei Taisaku System CWAT Saishin no Naibu Joho Roei Taisaku System 'CWAT' ni Tsuite", [online], 28 October, 2005 (28.10.05), Kabushiki Kaisha Intelligent Wave, [retrieval date 14 March, 2006 (14.03.06)], Internet <URL:http://expo.nikkeibp.co.jp/secu-ex/2005/img_work/1028_10.pdf> | 1-9 |
| A | JP 2001-256064 A  (Mitsubishi Electric Corp.), 21 September, 2001 (21.09.01), Par. No. [0055] (Family: none) | 1-9 |

|X| Further documents are listed in the continuation of Box C.        |_| See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 March, 2006 (14.03.06) | Date of mailing of the international search report<br>28 March, 2006 (28.03.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/300021

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-213476 A (Nomura Research Institute, Ltd.), 29 July, 2004 (29.07.04), Full text; all drawings (Family: none) | 1-9 |
| A | JP 2003-330820 A (Mitsubishi Electric Corp.), 21 November, 2003 (21.11.03), Fig. 4 (Family: none) | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005149243 A

- WO 05048119 A